# FASCICULE DE BREVET EUROPEEN

(11) **EP 1 110 788 B1**
(45) Date de publication et mention de la délivrance du brevet: **24.09.2003**
(21) Numéro de dépôt: 00128021.3
(22) Date de dépôt: 20.12.2000
(51) Int. Cl.: B60K 11/04, F16F 1/377

(54) **Dispositif de montage d'un équipement, en particulier d'un module d'échange de chaleur, sur un véhicule automobile**
Aufhängungsvorrichtung für ein Gerät, insbesondere für ein Wärmetauschermodul in einem Kraftfahrzeug
Mounting device fo a device, in particular for a heat exchange module on a vehicle

(30) Priorité: 20.12.1999 FR 9916080
(43) Date de publication de la demande: 27.06.2001
(73) Titulaire: VALEO THERMIQUE MOTEUR S.A., 78321 La Verrière (FR)
(72) Inventeur: Guyomard, Jean-Nicolas, 27930 Le Mesnil Fuguet (FR)
(74) Mandataire: Rolland, Jean-Christophe

(56) Documents cités:
- DE-A- 2 035 306
- DE-U- 1 611 369
- DE-U- 8 430 600
- US-A- 3 121 467
- US-A- 4 579 184
- US-A- 4 662 432
- US-A- 4 773 496
- US-A- 5 544 714
- PATENT ABSTRACTS OF JAPAN vol. 012, no. 152 (M-695), 11 mai 1988 (1988-05-11) & JP 62 274123 A (SUZUKI MOTOR CO LTD), 28 novembre 1987 (1987-11-28)

## Description

L'invention se rapporte au montage des équipements de véhicule automobile.

Elle concerne plus particulièrement un dispositif de montage d'un équipement, en particulier d'un module d'échange de chaleur, sur une structure porteuse d'un véhicule automobile.

Un tel module d'échange de chaleur comprend habituellement, dans sa version la plus simple, un échangeur de chaleur tel que le radiateur de refroidissement du moteur du véhicule. Un tel module peut comprendre en outre au moins un autre échangeur de chaleur, par exemple un condenseur de climatisation, et, éventuellement, au moins un groupe moto-ventilateur propre à générer un flux d'air traversant le ou les échangeurs de chaleur composant le module.

Ce module doit être monté sur une structure porteuse du véhicule automobile, c'est-à-dire, généralement soit sur une poutre supérieure et une poutre inférieure faisant partie de la caisse du véhicule, soit encore sur une façade avant, prête à être montée sur le véhicule par le constructeur.

On rappelera qu'une telle façade est un élément de structure du véhicule, qui est susceptible d'intégrer divers équipements du véhicule, tels que projecteurs, clignotants, avertisseur sonore, échangeur thermique, groupe moto-ventilateur ou module de refroidissement complet, etc.

Le module d'échange de chaleur doit être fixé à la structure porteuse par des moyens susceptibles d'absorber les vibrations et de compenser les variations de dimensions dues aux dilatations thermiques.

Jusqu'à présent, le module d'échange de chaleur est fixé sur la structure porteuse du véhicule par l'intermédiaire de plots déformables, comprenant généralement deux plots d'un premier type placé en partie inférieure du module et deux plots d'un autre type, placés en partie supérieure du module.

Ces plots sont habituellement montés sur des pions issus des boîtes collectrices d'un échangeur de chaleur du module, ce qui oblige à prévoir des boîtes d'un type particulier, et fait courir le risque que ces pions puissent être détériorées de manière accidentelle.

En outre, il faut prévoir des moyens de fixation mécanique, tels que des chevilles, qui sont rapportés pour réaliser un verrouillage entre les plots et la structure porteuse.

Par conséquent, cette technique de montage connue nécessite la mise en place d'éléments rapportés, impliquant un surcoût du fait de la nécessité de prévoir des pièces supplémentaires et du temps nécessaire à leur montage dans le processus d'assemblage.

Un dispositif de montage d'un équipement selon le préambule de la revendication 1 est connu du document US-A-3 121 467.

L'invention a notamment pour but de surmonter les inconvénients précités.

Elle vise en particulier à proposer un dispositif de montage permettant de réduire le nombre de pièces nécessaires à l'assemblage et d'assurer un montage rapide.

L'invention propose à cet effet un dispositif de montage du type défini en introduction, lequel comprend au moins deux blocs récepteurs prévus sur la structure porteuse et comprenant chacun deux nervures parallèles en vis-à-vis, ainsi qu'au moins deux plots amortisseurs dont chacun est réalisé en un matériau déformable élastiquement et comporte deux rainures parallèles débouchant sur deux faces latérales opposées et propres à coopérer par coulissement avec les deux nervures parallèles d'un bloc récepteur, chaque plot amortisseur comprenant en outre une face d'appui propre à coopérer avec l'équipement et une face de butée propre à coopérer avec le bloc récepteur.

Ainsi, l'équipement est monté de manière particulièrement simple, grâce à des plots amortisseurs venant s'interposer entre l'équipement et des blocs récepteurs prévus sur la structure porteuse.

La mise en place des blocs récepteurs s'effectue simplement par coulissement par coopération des rainures de chaque plot amortisseur avec les nervures correspondantes du bloc récepteur qui doit le recevoir.

Cette solution ne nécessite pas de prévoir des pions sur les boîtes collectrices de l'échangeur de chaleur, ni d'éléments rapportés pour l'immobilisation des plots amortisseurs.

Dans une forme de réalisation de l'invention, le plot amortisseur comprend un corps dans lequel sont formées les rainures et un prolongement latéral rattaché au corps et contribuant à définir la face d'appui et la face de butée.

Selon une autre caractéristique de l'invention, les rainures du plot amortisseur et les nervures du bloc récepteur ont des sections de formes complémentaires qui sont propres à coopérer à frottement.

Le plot amortisseur peut comprendre au moins une dent de retenue formée en saillie dans une rainure et propre à venir en appui contre une nervure du bloc récepteur pour contribuer à immobiliser le plot amortisseur par rapport au bloc récepteur.

Le plot amortisseur peut comprendre également au moins un évidement propre à accroître la souplesse dans au moins une région choisie.

Le plot amortisseur est avantageusement formé en un matériau du type caoutchouc, élastomère ou analogue.

Selon une autre caractéristique de l'invention, les deux nervures du bloc récepteur sont rattachées à deux parois latérales opposées, propres à encadrer les deux faces latérales opposées d'un plot amortisseur.

Avantageusement, les deux parois latérales opposées du bloc récepteur sont rattachées perpendiculairement à une paroi de fond qui forme butée pour le plot amortisseur. Ces deux parois latérales opposées sont, de préférence, rattachées à une troisième paroi latérale, qui est elle-même rattachée perpendiculairement à la paroi de fond.

Dans une forme de réalisation préférée de l'invention, le dispositif comprend au moins un bloc récepteur prévu sur une traverse supérieure de la structure porteuse et au moins un bloc récepteur prévu sur une traverse inférieure de la structure porteuse. La traverse supérieure et la traverse inférieure font, de préférence, partie d'une façade avant.

En variante, ces traverses peuvent faire partie de la structure même du véhicule.

Dans une forme de réalisation préférée de l'invention, le dispositif comprend quatre blocs récepteurs dont les nervures respectives sont parallèles et quatre plots amortisseurs propres à coopérer respectivement avec ces quatre blocs récepteurs.

Avantageusement, le dispositif comprend en outre des moyens de fixation de l'équipement à la structure porteuse. Ces moyens de fixation comprennent, de préférence, des pattes d'encliquetage issues de la structure porteuse et venant coopérer avec des parties complémentaires issues de l'équipement.

Dans la description qui suit, faite seulement à titre d'exemple, on se réfère aux dessins annexés, sur lesquels :
- la figure 1 est une vue de face d'un module d'échange de chaleur monté sur une structure porteuse de véhicule automobile par un dispositif selon l'invention;
- la figure 2 est une vue en perspective d'un plot amortisseur;
- la figure 3 est une vue partielle à échelle agrandie de la structure porteuse au niveau d'un bloc récepteur;
- la figure 4 est une vue analogue à la figure 3 après mise en place d'un plot amortisseur et montage de l'équipement;
- la figure 5 est une vue en coupe selon la ligne V-V de la figure 4; et
- la figure 6 est une vue en perspective d'un plot amortisseur dans une variante de réalisation.

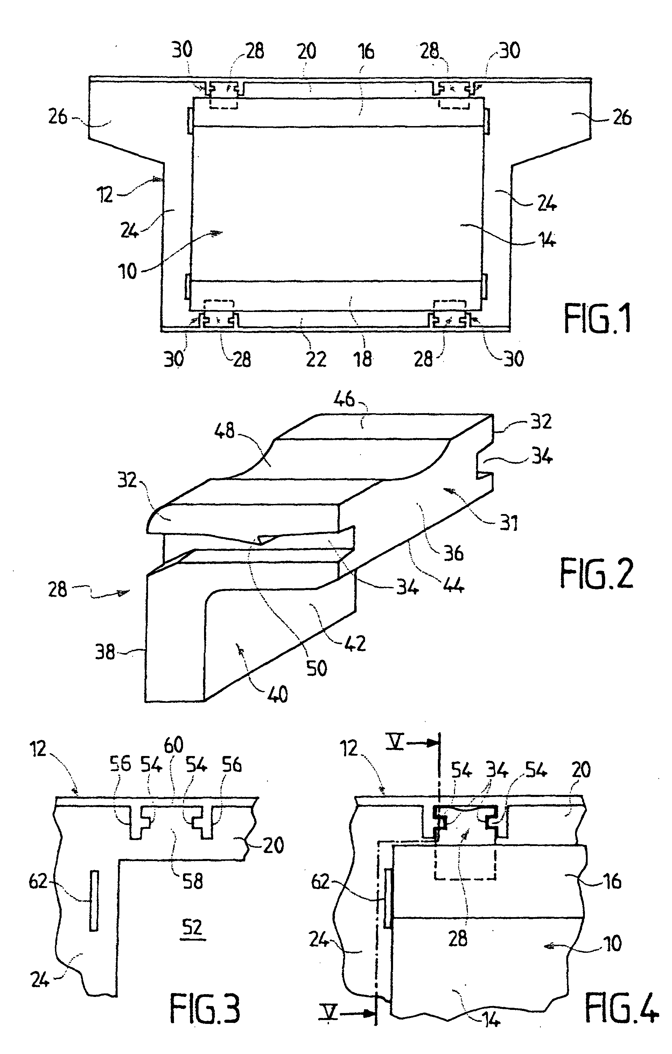

On a représenté sur la figure 1 un module d'échange de chaleur 10 monté et fixé sur une structure porteuse 12 d'un véhicule automobile.

Le module 10 est constitué ici d'un radiateur de refroidissement du moteur du véhicule, ce radiateur comprenant un faisceau 14 monté entre une boîte collectrice supérieure 16 et une boîte collectrice inférieure 18.

Le radiateur de refroidissement constitue en lui-même un module de refroidissement, auquel peut être adjoint un autre échangeur de chaleur, tel que, par exemple, un condenseur de climatisation.

La structure porteuse 12 est ici réalisée sous la forme d'une façade avant, c'est-à-dire d'un élément de structure susceptible d'intégrer en outre d'autres équipements tels que projecteurs, clignotants, avertisseur sonore, groupes moto-ventilateurs, etc.

La structure porteuse 12 comprend une traverse supérieure 20 sensiblement horizontale, une traverse inférieure 22 sensiblement horizontale et deux montants verticaux 24 reliant les traverses 20 et 22.

La structure porteuse 12 comprend en outre deux parties latérales 26 propres à assurer soit son montage sur des longerons (non représentés) de la caisse du véhicule, soit à recevoir des équipements liés au véhicule, tel que des blocs 5 optiques de projecteurs.

Le module 10 est monté sur la structure porteuse 12 par l'intermédiaire de quatre plots amortisseurs 28 s'engageant respectivement dans quatre blocs récepteurs 30 issus de la structure porteuse 12. Plus particulièrement, le dispositif de montage comprend deux blocs récepteurs 30 issus de la traverse supérieure 20 et portant respectivement deux plots amortisseurs 28 propres à prendre appui sur la boîte collectrice supérieure 16, ainsi qu'à deux autres blocs récepteurs 30 issus de la traverse inférieure 22 et propres à recevoir respectivement deux plots amortisseurs 28 prenant appui contre la boîte collectrice inférieure 18.

On décrira maintenant la structure d'un plot amortisseur 28 en référence à la figure 2. Le plot 28 est réalisé, dans l'exemple d'écrit, d'une seule pièce en un matériau déformable élastiquement, qui peut être par exemple un caoutchouc naturel ou synthétique, ou un matériau élastomère.

Le plot amortisseur 28 comprend un corps 31, de forme générale parallélépipèdique, présentant deux faces latérales opposées 32 dans lesquelles débouchent deux rainures 34 de section rectangulaire qui s'étendent parallèlement entre elles et parallèlement aux faces 32. Ces rainures 34 s'étendent depuis une face antérieure 36 jusqu'à une face postérieure 38.

En outre, le plot 28 comprend un prolongement latéral 40 de forme générale parallèlépipédique, qui est rattaché au corps 31 et est délimité, d'un côté, par la face postérieure 38 précitée. Du côté opposé, le prolongement latéral 40 est délimité par une face 42 qui se raccorde à angle droit avec une face 44 du corps 31. Ces faces 42 et 44 forment une surface d'appui de forme coudée et adaptée à la forme de la boîte collectrice 16 ou 18 du module 10. Du côté opposé à la face 44, le corps 31 possède une face supérieure 46 qui comporte un évidement central 48.

Par ailleurs, le plot amortisseur 28 comprend une dent de retenue 50 formée en saillie dans une rainure 34. Le plot peut comprendre, soit une seule dent de retenue, soit deux dents de retenue, dont la fonction sera expliquée plus loin.

On se réfère maintenant à la figure 3 pour décrire une partie de la structure porteuse 12. On voit sur la figure 3 une partie de la traverse supérieure 20 et une partie d'un montant vertical 24. On comprendra que les deux traverses 20 et 22 et les deux montants 24 forment un cadre délimitant une ouverture centrale 52, de forme générale rectangulaire, adapté à la forme du corps 14 du module 10, pour permettre à un flux d'air de balayer le faisceau 14 et de passer par l'ouverture 52.

Le bloc récepteur 30 comprend deux nervures parallèles en vis-à-vis 54 qui s'étendent parallèlement entre elles et perpendiculairement au plan de la structure porteuse 12. Ces nervures 54 sont destinées à coopérer par coulissement avec les rainures 34 d'un bloc pour permettre son maintien en position par rapport à la structure porteuse 12. Les nervures 54 et les rainures 34 ont des sections de formes complémentaires et sont propres à coopérer à frottement.

Les deux nervures 54 du bloc récepteur 30 sont rattachées à deux parois latérales opposées 56 propres à encadrer les deux faces latérales 32 d'un plot amortisseur 28. Les parois latérales 56 sont rattachées perpendiculairement à une paroi de fond 58 du bloc récepteur, cette paroi de fond étant formée directement sur la traverse supérieure 20.

En outre, les deux parois latérales 56 sont rattachées à une troisième paroi latérale 60 qui, elle même, est rattachée perpendiculairement à la paroi de fond 58. On comprendra que les deux parois latérales 56 portant les nervures 54, ainsi que la paroi latérale 60 et la paroi de fond 58 définissent un logement de forme adaptée à un plot 28. Lorsque ce plot est introduit dans le logement ainsi défini, la face postérieure 38 vient en appui contre la paroi de fond 58 et la face supérieure 46 vient en appui contre la paroi latérale 60, si bien que ce plot est parfaitement immobilisé. De plus les dents 50 du plot 28 viennent en appui contre la ou les nervures correspondantes du bloc récepteur 30 pour contribuer à immobiliser le plot en position.

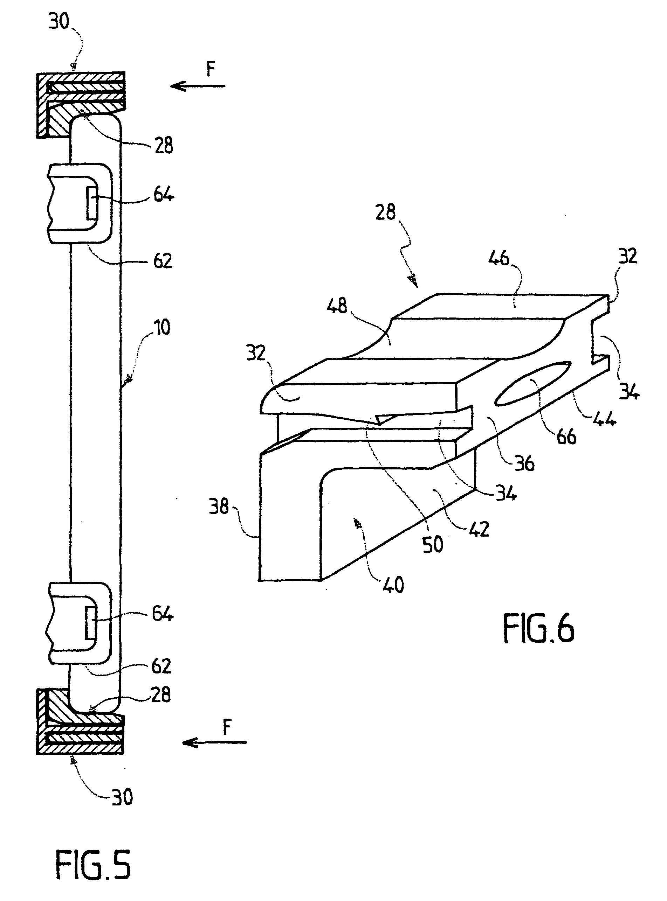

Les trois autres blocs récepteurs 30 sont de forme analogue et sont aménagés de telle sorte que leurs nervures respectives 54 sont parallèles entre elles pour définir une direction de montage commune, comme représenté par les flèches F sur la figure 5.

Pour réaliser le montage de l'échangeur de chaleur, on met d'abord en place les quatre plots récepteurs 28 puis on engage en force le module 10, de sorte que les boîtes collectrices respectives 16 et 18 du module viennent appuyer contre les faces d'appui correspondantes des plots, chaque face d'appui étant formée par la face 42 et la face 44 dudit plot.

Pour compléter la fixation de l'échangeur de chaleur, la structure porteuse comprend quatre pattes d'encliquetage 62, regroupées par paires sur les montants 24.

Ces pattes d'encliquetage font saillie à partir des montants et coopèrent chacune avec un bossage 64 issu des boîtes collectrices du module de refroidissement (figure 5).

Ainsi, le module de refroidissement se trouve parfaitement monté sur la structure porteuse avec amortissement, évitant la transmission de vibrations, tout en étant retenu par les pattes 62 dans sa position définitive.

Le montage et la fixation du module de refroidissement s'effectuent dans des conditions particulièrement simples, sans nécessiter d'outillage particulier.

Dans la variante de réalisation de la figure 6, le plot amortisseur 28 comprend en outre un évidement central 66 débouchant sur la face antérieure 36 et la face postérieure 38 et propre à accroître la souplesse du plot amortisseur dans au moins une région choisie.

Bien entendu, l'invention n'est pas limitée à la forme de réalisation décrite précédemment à titre d'exemple et s'étend à d'autres variantes.

On comprendra que la configuration des plots amortisseurs doit être adaptée à celle de l'équipement à monter et qu'il en est de même pour les blocs récepteurs 30.

Bien que, en théorie, l'équipement puisse être tenu seulement par trois plots amortisseurs coopérant avec trois blocs amortisseurs, on préfère, dans la plupart des cas, utiliser quatre plots amortisseurs engagés dans quatre blocs récepteurs, pour améliorer la tenue de l'équipement.

En outre, bien que dans l'exemple décrit, la structure porteuse soit constituée par une façade avant, il est possible de prévoir que les blocs récepteurs soient portés par deux traverses faisant directement partie de la structure ou de la caisse du véhicule.

## Revendications

1. Dispositif de montage d'un équipement (10), en particulier d'un module d'échange de chaleur, sur une structure porteuse (12) d'un véhicule automobile, comprenant au moins deux blocs récepteurs (30) prévus sur la structure porteuse (12), ainsi qu'au moins deux plots amortisseurs (28) dont chacun est réalisé en un matériau déformable élastiquement, chaque plot amortisseur comprenant en outre une face d'appui (42, 44) propre à coopérer avec l'équipement (10) et une face de butée (38) propre à coopérer avec le bloc récepteur (30),
**caractérisé en ce que** les blocs récepteurs comprennent chacun deux nervures parallèles (54) en vis à vis et les plots amortisseurs comportent chacun deux rainures parallèles (34) débouchant sur deux faces latérales opposées (32) et propres à coopérer par coulissement avec les deux nervures parallèles (54) d'un bloc récepteur (30).

2. Dispositif selon la revendication 1, **caractérisé en ce que** le plot amortisseur (28) comprend un corps (31) dans lequel sont formées les rainures (34) et un prolongement latéral (40) rattaché au corps et contribuant à définir la face d'appui (42, 44) et la face de butée (38).

3. Dispositif selon l'une des revendications 1 et 2, **caractérisé en ce que** les rainures (34) du plot amortisseur (28) et les nervures (54) du bloc récepteur (30) ont des sections de formes complémentaires et sont propres à coopérer à frottement.

4. Dispositif selon l'une des revendications 1 à 3, **caractérisé en ce que** le plot amortisseur (28) comprend une dent de retenue (50) formée en saillie dans une rainure (34) et propre à venir en appui contre une nervure (54) du bloc récepteur (30) pour contribuer à immobiliser le plot amortisseur par rapport au bloc récepteur.

5. Dispositif selon l'une des revendications 1 à 4, **caractérisé en ce que** le plot amortisseur (28) comprend au moins un évidement (66) propre à accroître la souplesse dans au moins une région choisie.

6. Dispositif selon l'une des revendications 1 à 5, **caractérisé en ce que** le plot amortisseur (28) est formé en un matériau du type caoutchouc, élastomère ou analogue.

7. Dispositif selon l'une des revendications 1 à 6, **caractérisé en ce que** les deux nervures (54) du bloc récepteur (30) sont rattachées à deux parois latérales opposées (56), propres à encadrer les deux faces latérales opposées (32) d'un plot amortisseur (28).

8. Dispositif selon la revendication 7, **caractérisé en ce que** les deux parois latérales opposées (56) du bloc récepteur (30) sont rattachées perpendiculairement à une paroi de fond (58) qui forme butée pour le plot amortisseur (28).

9. Dispositif selon la revendication 8, **caractérisé en ce que** les deux parois latérales opposées (56) du bloc récepteur (30) sont rattachées à une troisième paroi latérale (60) qui elle même est rattachée perpendiculairement à la paroi de fond (58).

10. Dispositif selon l'une des revendications 1 à 9, **caractérisé en ce qu'**il comprend au moins un bloc récepteur (30) prévu sur une traverse supérieure (20) de la structure porteuse et au moins un bloc récepteur (30) prévu sur une traverse inférieure (22) de la structure porteuse.

11. Dispositif selon la revendication 10, **caractérisé en ce que** la traverse supérieure (20) et la traverse inférieure (22) font partie d'une façade avant (12).

12. Dispositif selon l'une des revendications 1 à 11, **caractérisé en ce qu'**il comprend quatre blocs récepteurs (30) dont les nervures respectives (54) sont parallèles et quatre plots amortisseurs (28) propres à coopérer respectivement avec ces quatre blocs récepteurs.

13. Dispositif selon l'une des revendications 1 à 12, **caractérisé en ce qu'**il comprend en outre des moyens de fixation (62, 64) de l'équipement (10) à la structure porteuse (12).

14. Dispositif selon la revendication 13, **caractérisé en ce que** les moyens de fixation comprennent des pattes d'encliquetage (62) issues de la structure porteuse (12) et venant coopérer avec des parties complémentaires (64) issues de l'équipement (10).

## Patentansprüche

1. Vorrichtung zum Installieren einer Ausstattung (10), insbesondere eines Wärmeaustauschmoduls auf einer Tragstruktur (12) eines Kraftfahrzeugs, die mindestens zwei Aufnahmeblöcke (30) umfasst, die auf der Tragstruktur (12) vorgesehen sind, sowie mindestens zwei Dämpfklötze (28), von welchen jeder aus einem elastisch verformbaren Werkstoff hergestellt wird, wobei jeder Dämpfklotz außerdem eine Auflagefläche (42, 44) umfasst, die dazu geeignet ist, mit der Ausstattung (10) und einer Anschlagfläche (38) zusammenzuwirken, die dazu geeignet ist, mit dem Aufnahmeblock (30) zusammenzuwirken, **dadurch gekennzeichnet, dass** die Aufnahmeblöcke jeweils zwei parallele Rippen (54) einander gegenüberliegend umfassen und die Dämpfklötze jeweils zwei parallele Nuten (34) umfassen, die auf zwei seitlichen einander gegenüberliegenden Flächen (32) münden und dazu geeignet sind, durch Schieben mit den zwei parallelen Rippen (54) eines Aufnahmeblocks (30) zusammenzuwirken.

2. Vorrichtung nach Anspruch 1, **dadurch gekennzeichnet, dass** der Dämpfklotz (28) einen Körper (31) umfasst, in dem Nuten (34) geformt sind und eine seitliche Verlängerung (40), die an den Körper angeschlossen ist und dazu beiträgt, die Auflagefläche (42, 44) und die Anschlagfläche (38) zu definieren.

3. Vorrichtung nach einem der Ansprüche 1 und 2, **dadurch gekennzeichnet, dass** die Nuten (34) des Dämpfklotzes (28) und die Rippen (54) des Aufnahmeblocks (30) Abschnitte in ergänzenden Formen haben und dazu geeignet sind, durch Reibung zusammenzuwirken.

4. Vorrichtung nach einem der Ansprüche 1 bis 3, **dadurch gekennzeichnet, dass** der Dämpfklotz (28) einen Rückhaltezahn (50) in eine Nute (34) hineinragend umfasst und der dazu geeignet ist, gegen eine Rippe (54) des Aufnahmeblocks (30) zum Aufliegen zu kommen, um zum Arretieren des Dämpfklotzes in Bezug auf den Aufnahmeblock beizutragen.

5. Vorrichtung nach einem der Ansprüche 1 bis 4, **dadurch gekennzeichnet, dass** der Dämpfklotz (28) mindestens eine Aussparung (66) umfasst, die dazu geeignet ist, die Geschmeidigkeit in mindestens einer ausgewählten Region zu steigern.

6. Vorrichtung nach einem der Ansprüche 1 bis 5, **dadurch gekennzeichnet, dass** der Dämpfklotz (28) aus einem Werkstoff des Typs Kautschuk, Elastomer oder ähnlichem gebildet ist.

7. Vorrichtung nach einem der Ansprüche 1 bis 6, **dadurch gekennzeichnet, dass** die zwei Rippen (54) des Aufnahmeblocks (30) an zwei einander gegenüber liegende seitliche Wände (56) angeschlossen sind, die dazu geeignet sind, die zwei einander gegenüberliegenden seitlichen Flächen (32) eines Dämpfklotzes (28) zu umrahmen.

8. Vorrichtung nach Anspruch 7, **dadurch gekennzeichnet, dass** die zwei einander gegenüberliegenden seitlichen Wände (56) des Aufnahmeblocks (30) senkrecht an eine Bodenwand (58) angeschlossen sind, die einen Anschlag für den Dämpfklotz (28) bildet.

9. Vorrichtung nach Anspruch 8, **dadurch gekennzeichnet, dass** die zwei einander gegenüberliegenden seitlichen Wände (56) des Aufnahmeblocks (30) an eine dritte seitliche Wand (60) angeschlossen sind, die selbst senkrecht an die Bodenwand (58) angeschlossen ist.

10. Vorrichtung nach einem der Ansprüche 1 bis 9, **dadurch gekennzeichnet, dass** sie mindestens einen Aufnahmeblock (30) umfasst, der auf einem oberen Querbalken (20) der Tragstruktur vorgesehen ist und mindestens einen Aufnahmeblock (30), der auf einem unteren Querbalken (22) der Tragstruktur vorgesehen ist.

11. Vorrichtung nach Anspruch 10, **dadurch gekennzeichnet, dass** der obere Querbalken (20) und der untere Querbalken (22) zu einer vorderen Fassade (12) gehören.

12. Vorrichtung nach einem der Ansprüche 1 bis 11, **dadurch gekennzeichnet, dass** sie vier Aufnahmeblöcke (30) umfasst, deren jeweilige Rippen (54) parallel sind, und vier Dämpfklötze (28), die dazu geeignet sind, jeweils mit den vier Aufnahmeblöcken zusammenzuwirken.

13. Vorrichtung nach einem der Ansprüche 1 bis 12, **dadurch gekennzeichnet, dass** sie außerdem Befestigungsmittel (62, 64) der Ausstattung (10) an der Tragstruktur (12) umfasst.

14. Vorrichtung nach Anspruch 13, **dadurch gekennzeichnet, dass** die Befestigungsmittel Einrastpratzen (62) umfassen, die aus der Tragstruktur (12) stammen und mit den ergänzenden Teilen (64), die aus der Ausstattung stammen (10) zum Zusammenwirken kommen.

## Claims

1. Device for mounting an equipment item (10), particularly a heat exchange module, on a bearing structure (12) of a motor vehicle, comprising at least two receiving blocks (30) provided on the bearing structure (12) and at least two damping pads (28) each of which is made of an elastically deformable material, each damping pad further comprising a bearing face (42, 44) able to collaborate with the equipment item (10) and an abutment face (38) able to collaborate with the receiving block (30), **characterized in that** the receiving blocks each comprise two parallel ribs (54) facing each other and the damping pads each comprise two parallel grooves (34) opening onto two opposed lateral faces (32) and able to collaborate in sliding with the two parallel ribs (54) of a receiving block (30).

2. Device according to Claim 1, **characterized in that** the damping pad (28) comprises a body (31) in which the grooves (34) are formed and a lateral extension (40) attached to the body and contributing to defining the bearing face (42, 44) and the abutment face (38).

3. Device according to one of Claims 1 and 2, **characterized in that** the grooves (34) of the damping pad (28) and the ribs (54) of the receiving block (30) have cross sections of complementary shapes and are able to collaborate with friction.

4. Device according to one of Claims 1 to 3, **characterized in that** the damping pad (28) comprises a retaining tooth (50) formed as a projection into a groove (34) and able to come to bear against a rib (54) of the receiving block (30) to contribute to immobilizing the damping pad with respect to the receiving block.

5. Device according to one of Claims 1 to 4, **characterized in that** the damping pad (28) comprises at least one recess (66) able to increase the flexibility in at least one chosen region.

6. Device according to one of Claims 1 to 5, **characterized in that** the damping pad (28) is formed of a material of the rubber, elastomer or similar type.

7. Device according to one of Claims 1 to 6, **characterized in that** the two ribs (54) of the receiving block (30) are attached to two opposed side walls (56) able to flank the two opposed lateral faces (32) of a damping pad (28).

8. Device according to Claim 7, **characterized in that** the two opposed side walls (56) of the receiving block (30) are attached at right angles to an end wall (58) which forms an abutment for the damping pad (28).

9. Device according to Claim 8, **characterized in that** the two opposed side walls (56) of the receiving block (30) are attached to a third side wall (60) which is itself attached at right angles to the end wall (58).

10. Device according to one of Claims 1 to 9, **characterized in that** it comprises at least one receiving block (30) provided on an upper crossmember (20) of the bearing structure and at least one receiving block (30) provided on a lower crossmember (22) of the bearing structure.

11. Device according to Claim 10, **characterized in that** the upper crossmember (20) and the lower crossmember (22) form part of a front facade (12).

12. Device according to one of Claims 1 to 11, **characterized in that** it comprises four receiving blocks (30) the respective ribs (54) of which are parallel and four damping pads (28) able respectively to collaborate with these four receiving blocks.

13. Device according to one of Claims 1 to 12, **characterized in that** it further comprises means (62, 64) for fixing the equipment item (10) to the bearing structure (12).

14. Device according to Claim 13, **characterized in that** the fixing means comprise clip-in tabs (62) originating out of the bearing structure (12) and collaborating with complementary parts (64) originating out of the equipment item (10).
